# EUROPEAN PATENT APPLICATION

(11) **EP 2 955 072 A1**
(43) Date of publication of application: **16.12.2015**
(21) Application number: 14382220.3
(22) Date of filing: 13.06.2014
(51) Int. Cl.: B60T 17/04, F16L 29/00

(54) **Connector for vehicle hydralic braking system**

(71) Applicant: J.Juan S.A., 08850 Gavá (ES)
(72) Inventor: Cuadrado Sola, Juan Antonio, 08850 Gavá (ES); Simon Bacardit, Juan, 08013 Barcelona (ES)
(74) Representative: Carvajal y Urquijo, Isabel

(57) **Abstract**

A connector for quick assembly of hydraulic braking systems in vehicles, which comprises a first connecting end (20, 30, 40) associated to a first element (2) of the system and a second connecting end (50, 60, 70) associated to a second element (5) of the system, configured to be connected to each other axially. The first connecting end (20, 30, 40) comprises a fixed stopper (21, 31, 41), and the second connecting end (50, 60, 70) comprises a mobile stopper (51, 61, 71) and a rupture piece (52, 62, 72). The fixed stopper (21, 31, 41) is configured to frontally push the mobile stopper (51,61,71) during connection, causing the mobile stopper (51, 61, 71) to slide against the rupture piece (52, 62, 72) so as to rupture both the fixed stopper (21, 31, 41) and the mobile stopper (51, 61, 71), thus establishing hydraulic communication.

## Description

### Field of the Invention

The present invention relates to a connector and a method for quick assembly of hydraulic braking systems in vehicles.

### Background of the invention

Connectors for quick assembly of hydraulic braking systems in vehicles enable the different elements making up the system to be assembled without having to subsequently fill the hydraulic circuit. In other words, they integrate the working fluid under appropriate conditions for operation thereof. This prevents, once the system has been assembled, having to apply a complex purge and fill process, the purpose of which is to empty out the circuit in order to take the air out of it and subsequently fill it with hydraulic fluid. This process raises costs and slows down the method for assembling said hydraulic systems.

For this purpose, system elements, supplied separately, are therefore used, into which the hydraulic fluid is incorporated prior to the assembly thereof, under appropriate conditions that enable the operation of the same. These elements require quick-assembly connectors, which must ensure that the elements are separately leak-tight prior to being connected, and enable them to be in hydraulic communication once said connection has been made. Likewise, during this connection or transition phase, the possible leakage of hydraulic fluid held inside the same must be avoided, and air must be prevented from entering the hydraulic circuit. At the same time, they should offer a simple, quick and efficient way of connecting.

The elements which normally make up said hydraulic systems are usually present in the actuation (brake pumps), in the stability and safety controls (compensators, anti-lock systems for wheels or *ABS,* electronic stability systems or *ESP,* etc.), in the braking devices (brake calipers), and in the hydraulic distribution and intercommunication thereof (brake hoses, tubes pipes, etc.). Within this field there are various known solutions based on the use of connectors equipped with mechanical valves having resilient springs.

One of the most representative may be seen in document US2005/0081929A1. It shows a quick-mount connector between two tubes of a hydraulic system, which comprises a first element and a second element set up for the passage of a fluid under pressure, and whose connecting ends are configured to connect axially to each other, forming a leak-tight joint between said elements. Each one of these elements comprises a complex mobile valve that is actuated by a spring, which moves in a snug fashion inside the housing set up for this purpose, between a position of closure (which seals the corresponding tube prior to its being connected) and a position of opening (which enables hydraulic communication between the two tubes after they are connected).

This solution requires, in its design phase, a meticulous study of its structural and functional configuration, in accordance with the specific application for which it is intended. It likewise requires, in its manufacturing phase, a significant number of components and a complex and precise assembly thereof. These are factors that increase the cost of the end product.

The present invention solves the problems set forth above with a connector for assembling hydraulic braking systems in vehicles, the configuration of which lends it great simplicity, which facilitates its manufacturing, great versatility, and high functionality, thus improving the method for quick assembly of hydraulic braking systems in vehicles, reducing time and costs. All of this without forgoing the important features and high efficiency that are to be demanded of this type of connectors.

### Description of the invention

In accordance with a first object of protection, the present invention relates to a connector for quick assembly of hydraulic braking systems in vehicles, comprising:
- a first connecting end associated to a first element of the system, which has a first conduit with a first hole, set up for the passage of a hydraulic fluid; and
- a second connecting end associated to a second element of the system, which has a second conduit with a second hole, set up for the passage of a hydraulic fluid.

The first connecting end is configured to be connected axially to the second connecting end, forming a leak-tight joint between the elements. Preferably, one of the connecting ends is of the female type, and the other is of the male type.

The first element and the second element correspond to connectable elements of hydraulic braking systems in a vehicle. For example, they may be elements of the actuation (brake pumps), of the stability and safety controls (compensators, anti-lock systems for wheels or *ABS,* electronic stability systems or *ESP,* etc.), of the braking devices (brake calipers), and/or of the hydraulic distribution and intercommunication thereof (brake hoses, tubes, pipes, etc.). The first element and the second element can be supplied separately. Each of them, duly filled and purged, i.e. holding the hydraulic fluid inside them and without air in the circuit. In this way, once they have been mounted and connected, they are ready to carry out their function.

The first connecting end comprises a fixed stopper configured to seal said first connecting end, while the second connecting end comprises:
- a mobile stopper configured to seal said second connecting end; and
- a rupture piece in a fixed arrangement between the mobile stopper and the second hole, which has a passage conduit that is in hydraulic communication with the second conduit.

The fixed stopper and the mobile stopper prevent any leakage of the hydraulic fluid contained in the first conduit and the second conduit, respectively, before they are connected. The fixed stopper is configured to frontally push the mobile stopper when connecting the first connecting end to the second connecting end, causing the mobile stopper to slide against the rupture piece, which is in turn configured to rupture both the fixed stopper and the mobile stopper, thus establishing hydraulic communication between the conduits.

Preferably, the first connecting end is of the female type and comprises an inner housing configured to house the fixed stopper, while the second connecting end is of the male type and comprises a hollow sliding body that clasps the circumference of the mobile stopper, and inside of which the rupture piece is arranged. The sliding body is configured to allow the mobile stopper to slide against the rupture piece. Said sliding is brought about by inserting the second connecting end inside the first connecting end. Specifically, during said insertion, the fixed stopper is made to face the mobile stopper, until the two are in contact. The second end can be inserted further in, since the fixed stopper begins to push the mobile stopper, causing said mobile stopper to move back along the sliding body, directly against the rupture piece.

Preferably, the first connecting end delimits a transition space around the fixed stopper, while the sliding body comprises a transition end that fits in the transition space, so as to snugly sit therein while the first connecting end is connected to the second connecting end. The inside the transition space finishes in a conical wall, whereas the outside of the transition end finishes in a curved, preferably spherical wall, establishing tangential diametrical contact between the conical wall and the curved wall to thus ensure a leak-tight seal between the elements. This mechanical closure avoids the need to use rubber rings, which may cause a resilience effect in the system, which could in turn generate an unwanted absorption of volume due to the compression of said rubber.

Preferably, the first connecting end comprises an internal threaded passage, while the second connecting end comprises an external threaded passage configured to work together with the internal threaded passage, enabling the second connecting end to be screwed into the first connecting end.

In accordance with a first way of fastening, the second connecting end comprises an independent, free-spinning fastening nut, upon which the external threaded passage is arranged. The elements thus remain fastened by using a tube fitting, or another auxiliary element.

In accordance with a second way of fastening, the external threaded passage is arranged on the sliding body. The elements thus remain fastened without the need of using a tube fitting, or any other auxiliary element.

Preferably, the fixed stopper and the mobile stopper are made of a plastic material that can be ruptured when acted upon by the rupture piece. The plastic that is used must be compatible with the hydraulic fluid used, in compliance with the tensile and shear strength values required in order for it to operate properly, to which end a diverse array of, for example, thermoplastic materials may be used, such as polyacetal, polyamides, etc.

Preferably, the fixed stopper comprises a cylindrical side wall that has an open fastening end, configured to enclose the first hole; and a closed pushing end, opposite from the open fastening end, and frontally flat. The mobile stopper, in turn, comprises a circular side rim that has an open actuating end, configured to enclose the second hole; and a closed receiving end, opposite from the actuating end and frontally flat. The overlap of the pushing end with the receiving end forms a membrane upon which the rupture piece acts.

In accordance with a "flap-type" configuration, the pushing end comprises a first dorsal recess, while the receiving end comprises a second dorsal recess, which is frontally symmetrical to the first recess. The first recess and the second recess delimit the partial rupture line of a flap formed by the frontal overlap of the pushing end and the receiving end while the first connecting end is connected to the second connecting end.

La rupture piece comprises:
- a communication hole that puts the passage conduit in communication with the second conduit;
- a transition hole that puts the passage conduit in communication with the first conduit after the first connecting end has been connected to the second connecting end; and
- a coupling lip that enables the rupture piece to be fastened to the second connection end.

In accordance with a first way of configuring the rupture piece, it comprises a flat actuating end.

In accordance with a second way of configuring the rupture piece, it comprises a pointed actuating end.

The connector described above has a simple configuration, with a small number of components that can be easily modeled, thus simplifying the manufacturing thereof.

In accordance with a second object of protection, the present invention relates to a method for quick assembly of hydraulic braking systems in vehicles, by means of employing a connector of the sort described above, comprising the following stages:
a) initiating an axial connection between the first connecting end and the second connecting end;
b) frontally pushing the mobile stopper with the fixed stopper during axial connection, thus causing the mobile stopper to slide against the rupture piece; and
c) rupturing both the fixed stopper and the mobile stopper by means of the rupture piece in order to establish hydraulic communication between the conduits.

This method makes it possible to use elements of the hydraulic system that have been filled previously and purged separately, and which stay leak-tight as independent elements. At the same time, while connecting said elements, there is a transition in the hydraulic communication of both of them that does not allow air to enter from the outside, nor possible leakage or loss of the hydraulic fluid held inside. Rupture of the membrane or flap that makes up the fixed stopper and the mobile stopper ultimately causes the hydraulic fluid contained in said elements to come into communication, while at the same time forming a mechanical leak-tight seal between the first connecting end and the second connecting end. Thus, the assembly method of the present invention does not require subsequent stages for filling and purging the hydraulic fluid. Assembly of the hydraulic system is thus simplified, making it easier, quicker and simpler. At the same time, a connector is used that has a small number of components, and is highly operational and efficient.

### Brief description of the drawings

What follows is a very brief description of a series of drawings that aid in better understanding the invention, and which are expressly related to three embodiments of said invention that are presented by way of non-limiting examples of the same.
Figure 1 represents a longitudinal cross-section of the connector, prior to being connected, in accordance with a first preferred embodiment.
Figure 2 represents a longitudinal cross-section of the connector, while being connected, in accordance with a first preferred embodiment.
Figure 3 represents a longitudinal cross-section of the connector, after being connected, in accordance with a first preferred embodiment.
Figure 4 is a detail view of area Z of figure 3.
Figure 5 represents a longitudinal cross-section of the connector, prior to being connected, in accordance with a second preferred embodiment.
Figure 6 represents a longitudinal cross-section of the connector, while being connected, in accordance with a second preferred embodiment.
Figure 7 represents a longitudinal cross-section of the connector, after being connected, in accordance with a second preferred embodiment.
Figure 8 represents a perspective view of the rupture piece, in accordance with the first and the second preferred embodiments.
Figure 9 represents a front view of the rupture piece, in accordance with the first and the second preferred embodiments.
Figure 10 represents a longitudinal cross-section of the connector, prior to being connected, in accordance with a third preferred embodiment.
Figure 11 represents a longitudinal cross-section of the connector, while being connected, in accordance with a third preferred embodiment.
Figure 12 represents a longitudinal cross-section of the connector, after being connected, in accordance with a third preferred embodiment.

### Detailed description of the invention

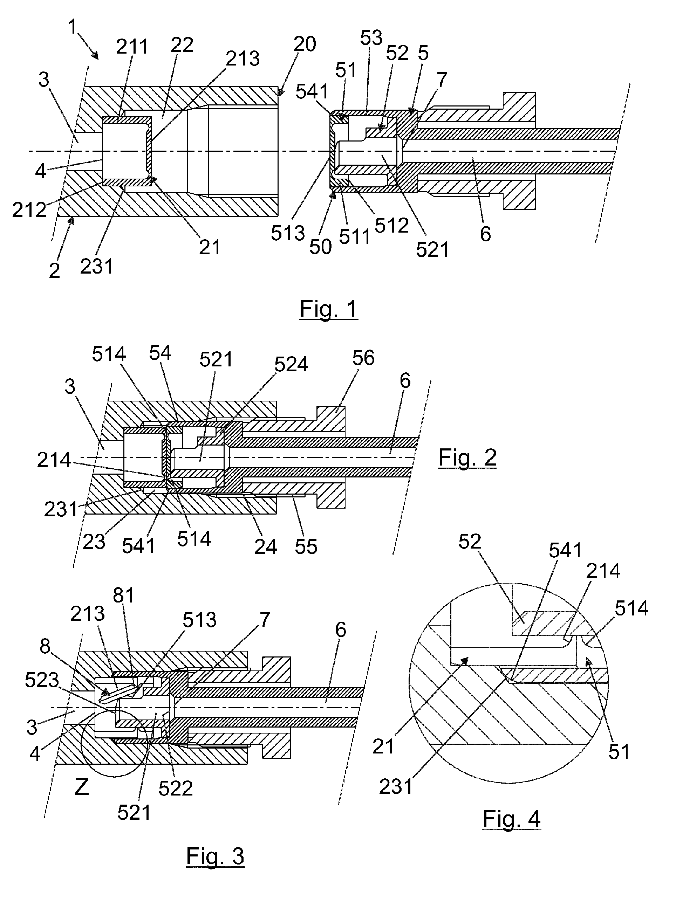

Figures 1-4 illustrate a first embodiment of the present invention. In them, it is possible to observe a connector (1) for quick assembly of a hydraulic braking system in a vehicle that comprises:
- a first connecting end (20) associated to a first element (2) of the system, which has a first conduit (3) with a first hole (4) set up for the passage of a hydraulic fluid; and
- a second connecting end (50) associated to a second element (5) of the system, which has a second conduit (6) with a second hole (7) set up for the passage of a hydraulic fluid.

The first connecting end (20) is configured to be connected axially to the second connecting end (50), so that after the connection a leak-tight joint is formed between the elements (2, 5).

The first element (2) and the second element (5) are supplied duly filled and purged, i.e. holding the hydraulic fluid inside them and without air in the circuit. In this way, once they have been mounted and connected, they are ready to carry out their function. Both elements (2, 5) are leak-tight, which makes it possible to manipulate them conveniently without risk of leakage of the hydraulic fluid held inside them. For illustrative purposes, only one end of each of the elements (2, 5) is shown. Nevertheless, said elements (2, 5) can be either initial or final elements of the hydraulic system, i.e. having just one connecting end (20, 50). Alternatively, they can be intermediate elements, i.e. each one of them having two connecting ends (20, 50), which in addition can interchangeably be two first connecting ends (20), two second connecting ends (50), one of each, or a combination between one connecting end (20, 50) according to the present invention and a different type of connection.

The first connecting end (20) comprises a fixed stopper (21) configured to seal said first connecting end (20), while the second connecting end (50) comprises:
- a mobile stopper (51) configured to seal said second connecting end (50); and
- a rupture piece (52) in a fixed arrangement between the mobile stopper (51) and the second hole (7), which has a passage conduit (521) in hydraulic communication with the second conduit (6).

The fixed stopper (21) and the mobile stopper (51) prevent any leakage of the hydraulic fluid contained in the first conduit (3) and the second conduit (6), respectively, before they are connected, figure 1. As illustrated in figure 2, the fixed stopper (21) is configured to frontally push the mobile stopper (51) when connecting the first connecting end (20) to the second connecting end (50), causing the mobile stopper (51) to slide against the rupture piece (52), which is in turn configured to rupture both the fixed stopper (21) and the mobile stopper (51), figure 3, thus establishing hydraulic communication between the conduits (3, 6).

The first connecting end (20) is of the female type and comprises an inner housing (22) configured to house the fixed stopper (21), while the second connecting end (50) is of the male type and comprises a hollow sliding body (53) that clasps the circumference of the mobile stopper (51), and inside of which the rupture piece (52) is arranged. The sliding body (53) is configured to allow the mobile stopper (51) to slide against the rupture piece (52). Said sliding is brought about by inserting the second connecting end (50) inside the first connecting end (20). As illustrated in figures 1-3, during said insertion the fixed stopper (21) is made to face the mobile stopper (51), until the two are in contact, figure 2. The second end (50) can be inserted further in, figure 3, since the fixed stopper (21) begins to push the mobile stopper (51), causing said mobile stopper (51) to move back along the sliding body (53), directly against the rupture piece (52).

The first connecting end (20) delimits a transition space (23) around the fixed stopper (21), while the sliding body (53) comprises a transition end (54) that fits in the transition space (23), so as to snugly sit therein while the first connecting end (20) is connected to the second connecting end (50). As can be observed in figure 4, the inside of the transition space (23) finishes in a conical wall (231), whereas the outside of the transition end (54) finishes in a curved, preferably spherical wall (541), establishing tangential diametrical contact between the conical wall (231) and the curved wall (541) to thus ensure a leak-tight seal between the elements (2, 5).

The first connecting end (20) comprises an internal threaded passage (24), while the second connecting end (50) comprises an external threaded passage (55) configured to work together with the internal threaded passage (24), enabling the second connecting end (50) to be screwed into the first connecting end (20).

In accordance with a first way of fastening, the second connecting end (50) comprises an independent, free-spinning fastening nut (56), upon which the external threaded passage (55) is arranged.

The fixed stopper (21) and the mobile stopper (51) are made of a plastic material that can be ruptured when acted upon by the rupture piece (52). The fixed stopper (21) comprises a cylindrical side wall (211) that has an open fastening end (212), configured to enclose the first hole (4); and a closed pushing end (213), opposite from the open fastening end (212), and frontally flat. The mobile stopper (51), in turn, comprises a circular side rim (511) that has an open actuating end (512), configured to enclose the second hole (7); and a closed receiving end (513), opposite from the actuating end (512) and frontally flat.

In accordance with a "flap-type" configuration, the pushing end (213) comprises a first dorsal recess (214), while the receiving end (513) comprises a second dorsal recess (514), which is frontally symmetrical to the first recess (214). The first recess (214) and the second recess (514) delimit the partial rupture line of a flap (8) formed by the frontal overlap of the pushing end (213) and the receiving end (513) while the first connecting end (20) is connected to the second connecting end (50). As can be observed in figure 3, the flap (8) keeps a fastening rib (81) to prevent said flap (8) from coming completely loose during rupture, which would obstruct the passage of hydraulic fluid in other sections of the system.

The rupture piece (52) comprises:
- a communication hole (522) that puts the passage conduit (521) in communication with the second conduit (6);
- a transition hole (523) that puts the passage conduit (521) in communication with the first conduit (3) after the first connecting end (20) has been connected to the second connecting end (50); and
- a coupling lip (524) that enables the rupture piece (52) to be fastened to the second connecting end (50).

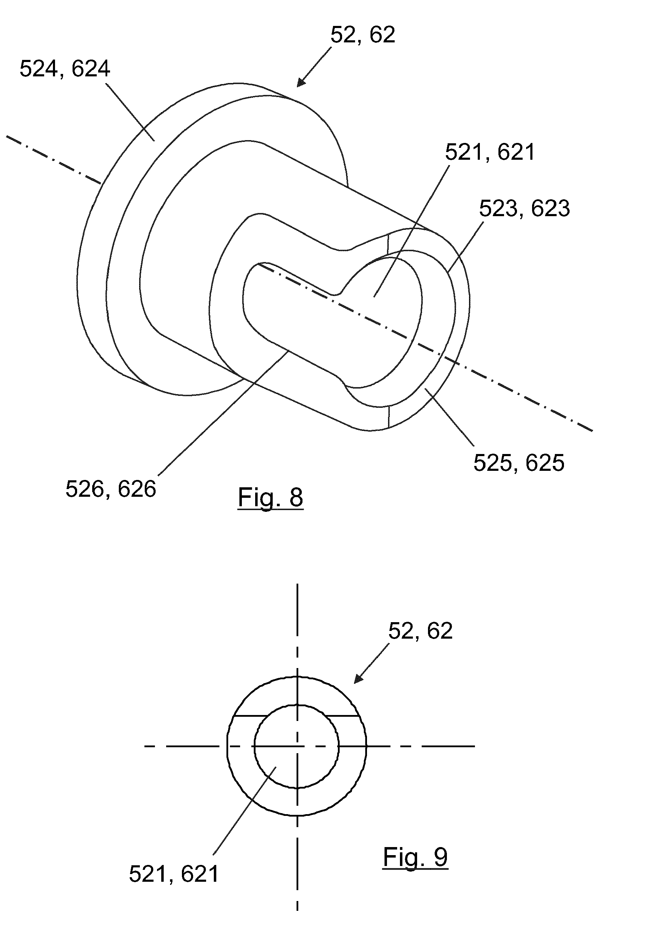

In accordance with a first way of configuring the rupture piece (52), it comprises a flat actuating end (525), figure 8.

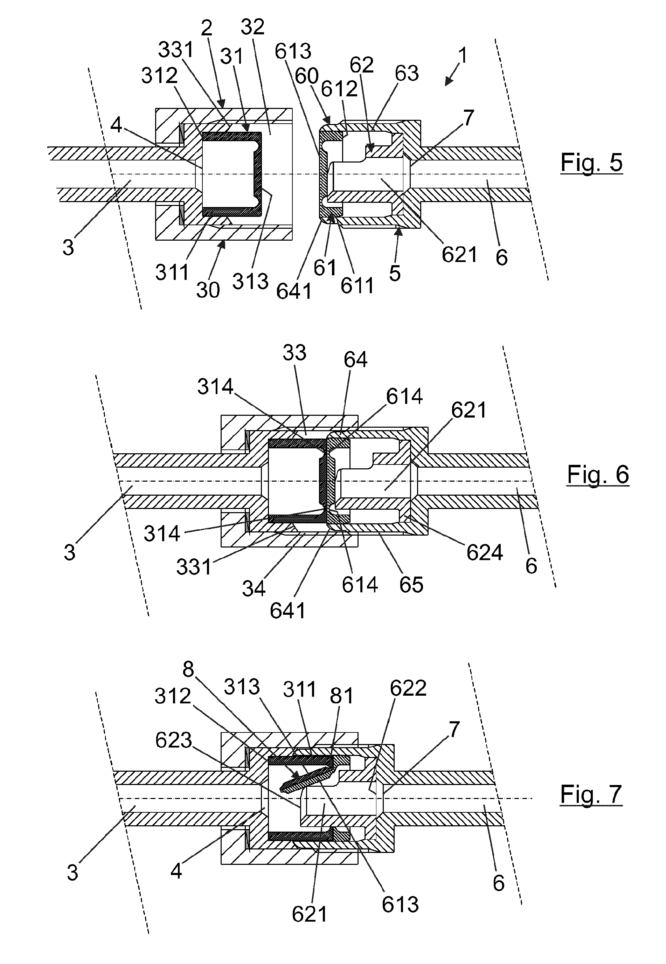

Figures 5-7 illustrate a second embodiment of the present invention. In them, it is possible to observe a connector (1) for quick assembly of a hydraulic braking system in a vehicle that comprises:
- a first connecting end (30) associated to a first element (2), which has a first conduit (3) with a first hole (4) set up for the passage of a hydraulic fluid; and
- a second connecting end (60) associated to a second element (5), which has a second conduit (6) with a second hole (7) set up for the passage of a hydraulic fluid.

The first connecting end (30) is configured for being axially connected to the second connecting end (60), forming a leak-tight joint between the elements (2, 5).

The first element (2) and the second element (5) are supplied duly filled and purged, i.e. holding the hydraulic fluid inside them and without air in the circuit. In this way, once they have been mounted and connected, they are ready to carry out their function. Both elements (2, 5) are leak-tight, which makes it possible to manipulate them conveniently without risk of leakage of the hydraulic fluid held inside them. For illustrative purposes, only one end of each of the elements (2, 5) is shown. Nevertheless, said elements (2, 5) can be either initial or final elements of the hydraulic system, i.e. having just one connecting end (30, 60). Alternatively, they can be intermediate elements, i.e. each one them having two connecting ends (30, 60), which in addition can interchangeably be two first connecting ends (30), two second connecting ends (60), one of each, or a combination between one connecting end (30, 60) according to the present invention and a different type of connection.

The first connecting end (30) comprises a fixed stopper (31) configured to seal said first connecting end (30), while the second connecting end (60) comprises:
- a mobile stopper (61) configured to seal said second connecting end (60); and
- a rupture piece (62) in a fixed arrangement between the mobile stopper (61) and the second hole (7), which has a passage conduit (621) in hydraulic communication with the second conduit (6).

The fixed stopper (31) and the mobile stopper (61) prevent any leakage of the hydraulic fluid contained in the first conduit (3) and the second conduit (6), respectively, before they are connected, figure 5. As illustrated in figure 6, the fixed stopper (31) is configured to frontally push the mobile stopper (61) when connecting the first connecting end (30) to the second connecting end (60), causing the mobile stopper (61) to slide against the rupture piece (62), which is in turn configured to rupture both the fixed stopper (31) and the mobile stopper (61), figure 7, thus establishing hydraulic communication between the conduits (3, 6).

The first connecting end (30) is of the female type and comprises an inner housing (32) configured to house the fixed stopper (31), while the second connecting end (60) is of the male type and comprises a hollow sliding body (63) that clasps the circumference of the mobile stopper (61), and inside of which the rupture piece (62) is arranged. The sliding body (63) is configured to allow the mobile stopper (61) to slide against the rupture piece (62). Said sliding is brought about by inserting the second connecting end (60) inside the first connecting end (30). As illustrated in figures 5-7, during said insertion the fixed stopper (31) is made to face the mobile stopper (61), until the two are in contact, figure 6. The second end (60) can be inserted further in, figure 7, since the fixed stopper (31) begins to push the mobile stopper (61), causing said mobile stopper (61) to move back along the sliding body (63), directly against the rupture piece (62).

The first connecting end (30) delimits a transition space (33) around the fixed stopper (31), while the sliding body (63) comprises a transition end (64) that fits in the transition space (33), so as to snugly sit therein while the first connecting end (30) is connected to the second connecting end (60). The inside of the transition space (33) finishes in a conical wall (331), whereas the outside of the transition end (64) finishes in a curved, preferably spherical wall (641), establishing tangential diametrical contact between the conical wall (331) and the curved wall (641) to thus ensure a leak-tight seal between the elements (2, 5).

The first connecting end (30) comprises an internal threaded passage (34), while the second connecting end (60) comprises an external threaded passage (65) configured to work together with the internal threaded passage (34), enabling the second connecting end (60) to be screwed into the first connecting end (30).

In accordance with a second way of fastening, the external threaded passage (65) is arranged on the sliding body (63).

The fixed stopper (31) and the mobile stopper (61) are made of a plastic material that can be ruptured when acted upon by the rupture piece (62). The fixed stopper (31) comprises a cylindrical side wall (311) that has an open fastening end (312), configured to enclose the first hole (4); and a closed pushing end (313), opposite from the open fastening end (312), and frontally flat. The mobile stopper (61), in turn, comprises a circular side rim (611) that has an open actuating end (612), configured to enclose the second hole (7); and a closed receiving end (613), opposite from the actuating end (612) and frontally flat.

In accordance with a "flap-type" configuration, the pushing end (313) comprises a first dorsal recess (314), while the receiving end (613) comprises a second dorsal recess (614), which is frontally symmetrical to the first recess (314). The first recess (314) and the second recess (614) delimit the partial rupture line of a flap (8) formed by the frontal overlap of the pushing end (313) and the receiving end (613) while the first connecting end (30) is connected to the second connecting end (60). As can be observed in figure 7, the flap (8) keeps a fastening rib (81) to prevent said flap (8) from coming completely loose during rupture, which would obstruct the passage of hydraulic fluid in other sections of the system.

The rupture piece (62) comprises:
- a communication hole (622) that puts the passage conduit (621) in communication with the second conduit (6);
- a transition hole (623) that puts the passage conduit (621) in communication with the first conduit (3) after the first connecting end (30) has been connected to the second connecting end (60); and
- a coupling lip (624) that enables the rupture piece (62) to be fastened to the second connecting end (60).

In accordance with a first way of configuring the rupture piece (62), it comprises a flat actuating end (625), figure 8.

Figures 8 and 9 represent two views of the rupture piece (52, 62), in accordance with the first and the second preferred embodiments. Said rupture piece (52, 62) additionally has a side opening (526, 626) configured to house the flap (8) after it has been ruptured.

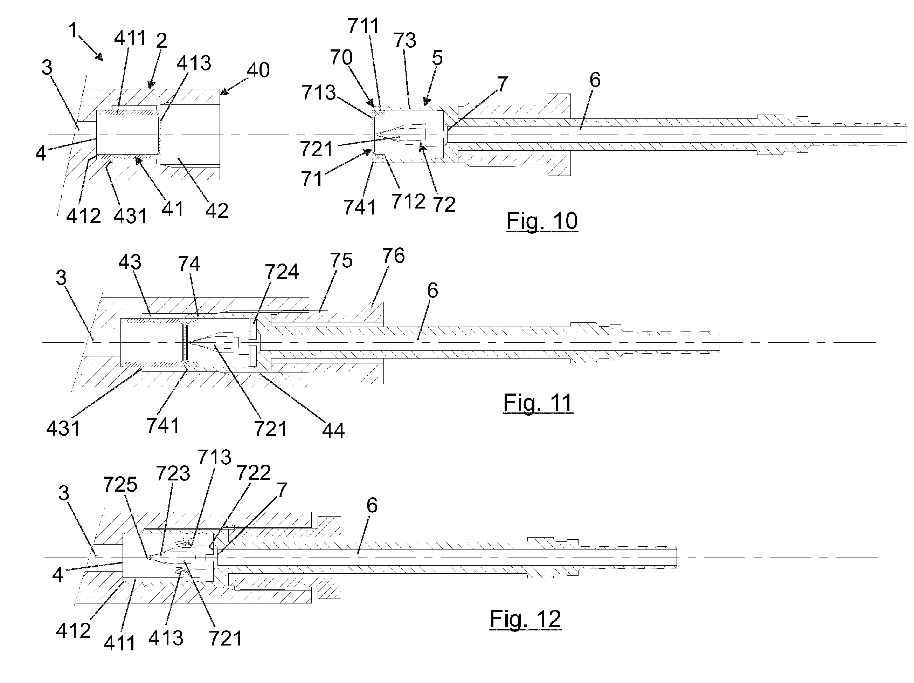

Figures 10-12 illustrate a third embodiment of the present invention. In them, it is possible to see a connector (1) for quick assembly of a hydraulic braking system in a vehicle that comprises:
- a first connecting end (40) associated to a first element (2), which has a first conduit (3) with a first hole (4) set up for the passage of a hydraulic fluid; and
- a second connecting end (70) associated to a second element (5), which has a second conduit (6) with a second hole (7) set up for the passage of a hydraulic fluid.

The first connecting end (40) is configured for being axially connected to the second connecting end (70), forming a leak-tight joint between the elements (2, 5).

The first element (2) and the second element (5) are supplied duly filled and purged, i.e. holding the hydraulic fluid inside them and without air in the circuit. In this way, once they have been mounted and connected, they are ready to carry out their function. Both elements (2, 5) are leak-tight, which makes it possible to manipulate them conveniently without risk of leakage of the hydraulic fluid held inside them. For illustrative purposes, only one end of the first element (2) is shown. Nevertheless, said element (2) can be either the initial or the final element of the hydraulic system, i.e. having just one connecting end (40, 70). Alternatively, it can be an intermediate element, i.e. counting with two connecting ends (40, 70), which in addition can interchangeably be two first connecting ends (40), two second connecting ends (70), one of each, or a combination between a connecting end (40, 70) of the present invention and a different type of connection. In this example, the second element (5) is indeed shown as having two ends, being the one that is to the right of the "pipette-type" figures, for a kind of connection that is different from that of the present invention.

The first connecting end (40) comprises a fixed stopper (41) configured to seal said first connecting end (40), while the second connecting end (70) comprises:
- a mobile stopper (71) configured to seal said second connecting end (70); and
- a rupture piece (72) in a fixed arrangement between the mobile stopper (71) and the second hole (7), which has a passage conduit (721) in hydraulic communication with the second conduit (6).

The fixed stopper (41) and the mobile stopper (71) prevent any leakage of the hydraulic fluid contained in the first conduit (3) and the second conduit (6), respectively, before they are connected, figure 10. As illustrated in figure 11, the fixed stopper (41) is configured to frontally push the mobile stopper (71) when connecting the first connecting end (40) to the second connecting end (70), causing the mobile stopper (71) to slide against the rupture piece (72), which is in turn configured to rupture both the fixed stopper (41) and the mobile stopper (71), figure 12, thus establishing hydraulic communication between the conduits (3, 6).

The first connecting end (40) is of the female type and comprises an inner housing (42) configured to house the fixed stopper (41), while the second connecting end (70) is of the male type and comprises a hollow sliding body (73) that clasps the circumference of the mobile stopper (71), and inside of which the rupture piece (72) is arranged. The sliding body (73) is configured to allow the mobile stopper (71) to slide against the rupture piece (72). Said sliding is brought about by inserting the second connecting end (70) inside the first connecting end (40). As can be observed in figures 10-12, during said insertion the fixed stopper (41) is made to face the mobile stopper (71), until the two are in contact, figure 11. The second end (70) can be inserted further in, figure 12, since the fixed stopper (41) begins to push the mobile stopper (71), causing said mobile stopper (71) to move back along the sliding body (73), directly against the rupture piece (72).

The first connecting end (40) delimits a transition space (43) around the fixed stopper (41), while the sliding body (73) comprises a transition end (74) that fits in the transition space (43), so as to snugly sit therein while the first connecting end (40) is connected to the second connecting end (70). The inside of the transition space (43) finishes in a conical wall (431), whereas the outside of the transition end (74) finishes in a curved, preferably spherical.wall (741), establishing tangential diametrical contact between the conical wall (431) and the curved wall (741) to thus ensure a leak-tight seal between the elements (2, 5).

The first connecting end (40) comprises an internal threaded passage (44), while the second connecting end (70) comprises an external threaded passage (75) configured to work together with the internal threaded passage (44), enabling the second connecting end (70) to be screwed into the first connecting end (40).

In accordance with a first way of fastening, the second connecting end (70) comprises an independent, free-spinning fastening nut (76), upon which the external threaded passage (75) is arranged.

The fixed stopper (41) and the mobile stopper (71) are made of a plastic material that can be ruptured when acted upon by the rupture piece (72). The fixed stopper (41) comprises a cylindrical side wall (411) that has an open fastening end (412), configured to enclose the first hole (4); and a closed pushing end (413), opposite from the open fastening end (412) and frontally flat. The mobile stopper (71), in turn, comprises a circular side rim (711) that has an open actuating end (712), configured to enclose the second hole (7); and a closed receiving end (713), opposite from the actuating end (712) and frontally flat.

The rupture piece (72) comprises:
- a communication hole (722) that puts the passage conduit (721) in communication with the second conduit (6);
- a transition hole (723) that puts the passage conduit (721) in communication with the first conduit (3) after the first connecting end (40) has been connected to the second connecting end (70); and
- a coupling lip (724) that enables the rupture piece (72) to be fastened to the second connecting end (70).

In accordance with a second way of configuring the rupture piece (72), it comprises a pointed actuating end (725), which ends up piercing the membrane that forms the overlap between the pushing end (413) and the receiving end (713).

In accordance with a second object of protection, the present invention relates to a method for quick assembly of hydraulic braking systems in vehicles, by means of employing a connector (1) of the sort described above, comprising the following stages:
a) initiating an axial connection between the first connecting end (20, 30, 40) and the second connecting end (50, 60, 70), figures 1, 5 and 10;
b) frontally pushing the mobile stopper (51, 61, 71) with the fixed stopper (21, 31, 41) during axial connection, thus causing the mobile stopper (51, 61, 71) to slide against the rupture piece (52, 62, 72), figures 2, 6 and 11; and
c) rupturing both the fixed stopper (21, 31, 41) and the mobile stopper (51, 61, 71) by means of the rupture piece (52, 62, 72) in order to establish hydraulic communication between the conduits (3, 6), figures 3, 7 and 12.

Stage a) it is brought about by screwing the second connecting end (50, 60, 70) into the first connecting end (20, 30, 40). This generates the insertion of said second connecting end (50, 60, 70) inside the first connecting end (20, 30, 40). During said insertion, the fixed stopper (21, 31, 41) is made to face the mobile stopper (51, 61, 71).
Stage b) starts when the fixed stopper (21, 31, 41) comes into contact with the mobile stopper (51,61, 71), owing to the insertion of the second connecting end (50, 60, 70) into the first connecting end (20, 30, 40). The second end (50, 60, 70) can be inserted further in, since the fixed stopper (21, 31, 41) begins to frontally push the mobile stopper (51, 61, 71), causing said mobile stopper (51, 61, 71) to move back along the sliding body (53, 63, 73), directly against the rupture piece (52, 62, 72).
Stage c) is brought about either when the rupture piece (52, 62, 72) overcomes the resistance of the partial rupture line of the flap (8) causing it to tear, in the first and second embodiments, or when the rupture piece (52, 62, 72) overcomes the resistance of the overlap between the pushing end (213, 313, 413) and the receiving end (513, 613, 713) thus piercing the same.

## Claims

1. A connector for quick assembly of hydraulic braking systems in vehicles that comprises:
• a first connecting end (20, 30, 40) associated to a first element (2) of the system, having a first conduit (3) with a first hole (4); and
• a second connecting end (50, 60, 70) associated to a second element (5) of the system, which has a second conduit (6) with a second hole (7);
wherein the first connecting end (20, 30, 40) is configured for being connected axially to the second connecting end (50, 60, 70), forming a leak-tight joint between the elements (2, 5); said connector (1) being **characterized in that** the first connecting end (20, 30, 40) comprises:
• a fixed stopper (21, 31, 41) configured to seal said first connecting end (20, 30, 40); **and in that** the second connecting end (50, 60, 70) comprises:
• a mobile stopper (51, 61, 71) configured to seal said second connecting end (50, 60, 70); and
• a rupture piece (52, 62, 72) in a fixed arrangement between the mobile stopper (51, 61, 71) and the second hole (7), which has a passage conduit (521, 621, 721) in hydraulic communication with the second conduit (6);
wherein the fixed stopper (21, 31, 41) is configured to frontally push the mobile stopper (51, 61, 71) when the first connecting end (20, 30, 40) is connected to the second connecting end (50, 60, 70), causing the mobile stopper (51, 61, 71) to slide against the rupture piece (52, 62, 72), which is in turn configured to rupture both the fixed stopper (21, 31, 41) and the mobile stopper (51, 61, 71), thus establishing hydraulic communication between the conduits (3, 6).

2. The connector for quick assembly of hydraulic braking systems in vehicles according to claim **1 characterized in that** the first connecting end (20, 30, 40) comprises an inner housing (22, 32, 42) configured to house the fixed stopper (21, 31, 41); **and in that** the second connecting end (50, 60, 70) comprises a hollow sliding body (53, 63, 73) that clasps the circumference of the mobile stopper (51, 61, 71) and inside of which the rupture piece (52, 62, 72) is arranged, which is configured to allow the mobile stopper (51, 61, 71) to slide against the rupture piece (52, 62, 72).

3. The connector for quick assembly of hydraulic braking systems in vehicles according to claim 2 **characterized in that** the first connecting end (20, 30, 40) delimits a transition space (23, 33, 43) around the fixed stopper (21, 31, 41); **and in that** the sliding body_(53, 63, 73) comprises a transition end (54, 64, 74) that fits in the transition space (23, 33, 43), so as to snugly sit therein while the first connecting end (20, 30, 40) is connected to the second connecting end (50, 60, 70).

4. The connector for quick assembly of hydraulic braking systems in vehicles according to claim 3 **characterized in that** the inside of the transition space (23, 33, 43) finishes in a conical wall (231, 331, 431); **and in that** the outside of the transition end (54, 64, 74) finishes in a curved wall (541, 641, 741), establishing tangential diametrical contact between the conical wall (231, 331, 431) and the curved wall (541, 641, 741) to thus ensure a leak-tight seal between the elements (2, 5).

5. The connector for quick assembly of hydraulic braking systems in vehicles according to any of the preceding claims 1 to 4 **characterized in that** the first connecting end (20, 30, 40) comprises an internal threaded passage (24, 34, 44); **and in that** the second connecting end (50, 60, 70) comprises an external threaded passage (55, 65, 75) configured to work together with the internal threaded passage (24, 34, 44), enabling the second connecting end (50, 60, 70) to be screwed into the first connecting end (20, 30, 40).

6. The connector for quick assembly of hydraulic braking systems in vehicles according to claim 5 **characterized in that** the second connecting end (50, 70) comprises an independent, free-spinning fastening nut (56, 76), upon which the external threaded passage (55, 75) is arranged.

7. The connector for quick assembly of hydraulic braking systems in vehicles according to claims 4 and 5 **characterized in that** the external threaded passage (65) is arranged on the sliding body (63).

8. The connector for quick assembly of hydraulic braking systems in vehicles according to any of the precedent claims 1 to 7 **characterized in that** the fixed stopper (21, 31, 41) and the mobile stopper (51, 61, 71) are made of a plastic material that can be ruptured when acted upon by the rupture piece (52, 62, 72).

9. The connector for quick assembly of hydraulic braking systems in vehicles according to any of the claims 1 to 8 **characterized in that** the fixed stopper (21, 31, 41) comprises a cylindrical side wall (211, 311, 411) that has:
• an open fixing end (212, 312, 412), configured to enclose the first hole (4); and
• a closed pushing end (213, 313, 413), opposite from the open fixing end (212, 312, 412) and frontally flat.

10. The connector for quick assembly of hydraulic braking systems in vehicles according to any of the claims 1 to 9 **characterized in that** the mobile stopper (51, 61, 71) comprises a circular side rim (511, 611, 711) that has:
• an open actuating end (512, 612, 712), configured for enclosing the second hole (7); and
• a closed receiving end (513, 613, 713), opposite from the actuating end (512, 612, 712) and frontally flat.

11. The connector for quick assembly of hydraulic braking systems in vehicles according to claims 9 and 10 **characterized in that** the pushing end (213, 313) comprises a first dorsal recess (214, 314); **and in that** the receiving end (513, 613) comprises a second dorsal recess (514, 614), which is frontally symmetrical to the first recess (214, 314); wherein the first recess (214, 314) and the second recess (514, 614) delimit the partial rupture line of a flap (8) formed by the frontal overlap of the pushing end (213, 313) and the receiving end (513, 613) while the first connecting end (20, 30) is connected to the second connecting end (50, 60).

12. The connector for quick assembly of hydraulic braking systems in vehicles according to any of the claims 1 to 11 **characterized in that** the rupture piece (52, 62, 72) comprises:
• a communication hole (522, 622, 722) that puts the passage conduit (521, 621, 721) in communication with the second conduit (6);
• a transition hole (523, 623, 723) that puts the passage conduit (521, 621, 721) in communication with the first conduit (3) after the first connecting end (20, 30, 40) has been connected to the second connecting end (50, 60, 70); and
• a coupling lip (524, 624, 724) that enables the rupture piece (52, 62, 72) to be fastened to the second connecting end (50, 60, 70).

13. The connector for quick assembly of hydraulic braking systems in vehicles according to claim 12 **characterized in that** the rupture piece (52, 62) comprises a flat actuating end (525, 625).

14. The connector for quick assembly of hydraulic braking systems in vehicles according to claim 12 **characterized in that** the rupture piece (72) comprises a pointed actuating end (725).

15. A method for quick assembly of hydraulic braking systems in vehicles by means of a connector according to any of the claims 1 to 14 **characterized in that** it comprises the following stages:
a) initiating an axial connection between the first connecting end (20, 30, 40) and the second connecting end (50, 60, 70);
b) frontally pushing the mobile stopper (51, 61, 71) with the fixed stopper (21, 31, 41) during axial connection, thus causing the mobile stopper (51,61,71) to slide against the rupture piece (52, 62, 72); and
c) rupturing both the fixed stopper (21, 31, 41) and the mobile stopper (51, 61, 71) by means of the rupture piece (52, 62, 72) in order to establish hydraulic communication between the conduits (3, 6).
